# EUROPÄISCHE PATENTANMELDUNG

(11) **EP 0 684 054 A1**
(43) Veröffentlichungstag der Anmeldung: **29.11.1995**
(21) Anmeldenummer: 95107704.9
(22) Anmeldetag: 20.05.1995
(51) Int. Cl.: A62D 3/00

(54) **Verfahren und Vorrichtung zum Einschmelzen von Asbest und/oder asbesthaltigem Material**

(30) Priorität: 26.05.1994 DE 4418410; 03.12.1994 DE 4443088; 03.12.1994 DE 4443090
(71) Anmelder: METALLGESELLSCHAFT AG, D-60323 Frankfurt am Main (DE)
(72) Erfinder: Rizzon, John, D-51503 Rösrath (DE)

(57) **Zusammenfassung**

Die vorliegende Erfindung beschreibt ein Verfahren und eine Vorrichtung zum Entsorgen von Asbest und/oder asbesthaltigem Material und von Reststoffen aus Abfallverbrennungsanlagen sowie von Aktivkoks und/oder Aktivkohle, bei dem das Material auf eine Korngröße < 50 mm zerkleinert wird, dem zerkleinerten Material Additive und feste Brennstoffe mit einer Korngröße < 50 mm zugesetzt werden und das vereinigte Material gemischt wird, das Gemisch in den Ringschacht (3) der Primärkammer (2) des Oberflächenschmelzofens (1) eingeleitet wird, in der Primärkammer (2) eine Temperatur von 1250 _{°} C bis 1600 °C eingestellt wird, das ablaufende geschmolzene Material und die Rauchgase die Primärkammer (2) durch den zentralen Auslauf (4) verlassen, das geschmolzene Material durch die Sekundärkammer (5) geleitet, granuliert und von einem Entschlacker (6) ausgetragen wird.

## Beschreibung

Die vorliegende Erfindung betrifft ein Verfahren und eine Vorrichtung zum Entsorgen von Asbest und/oder asbesthaltigem Material und ein Verfahren und eine Vorrichtung zum Entsorgen von Reststoffen aus Abfallverbrennungsanlagen sowie Aktivkoks und/oder Aktivkohle sowie ein Verfahren und eine Vorrichtung zum Entsorgen von Schwelkoks und/oder Pyrolysestaub.

Asbest ist ein Magnesiumsilikat, der als Serpentin die Zusammensetzung Mg₃[Si₂O₅](OH)₄ aufweist. Asbest kann direkt verwendet oder mit Zement vermischt werden. Je nach Einsatzgebiet sind unterschiedliche Möglichkeiten der Verwendung üblich, z. B. Spritzasbest, asbesthaltiger Putz, leichte asbesthaltige Platten oder Blauasbest.

Aufgrund der vom Asbest ausgehenden Gesundheitsgefährdung muß das in der Bauindustrie eingesetzte Material in großen Mengen entfernt und teuer entsorgt werden. Asbest wird gegenwärtig sehr kostenintensiv auf Sonderdeponien abgeladen.

Asbest und/oder asbesthaltige Materialien besitzen einen sehr hohen Schmelzpunkt von etwa 1550 _{°} C bis 1800 °C. Der Schmelzpunkt ist im wesentlichen von der Zusammensetzung abhängig. Die Umsetzung des gefährlichen Asbests in Form von Serpentin Mg₃[Si₂O₅](OH)₄ zu den umweltfreundlichen Asbestverbindungen Olivin 2MgO • Si02 und Enstatit Mg[Si0_{3]} verläuft über die nachfolgende endotherme Reaktion. 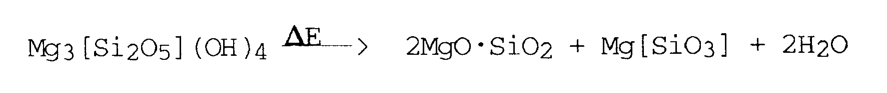 Aus der J-A-02303585 ist es bekannt, Asbest mit Verbrennungsasche zu Schlacke einzuschmelzen.

Das Abgas einer Müllverbrennungsanlage wird einer Rauchgasbehandlung, wie zum Beispiel Naßwäsche sowie Halbtrocken- oder Trockenverfahren unterzogen. Bei der Rauchgasbehandlung fällt benutztes Adsorptionsmittel als trockenes oder feuchtes, feinkörniges Pulver oder Staub als Reststoff an, das mit toxischem Material und Schwermetallen belastet ist. Um die niedrigen Grenzwerte für halogenierte Dibenzodioxine und -furane und Schwermetalle, insbesondere Cadmium, Quecksilber und Arsen einzuhalten, wird eine weitere Reinigungsstufe nachgeschaltet. Dafür werden Festbettherdofenkoks - und Aktivkohlefilter verwendet. Herdofenkoks wird auch als Aktivkoks bezeichnet. Üblich sind auch Flugstromverfahren, bei denen Herdofenkoks, Aktivkohle oder Gemische davon sowie Trägermaterial, wie Ca(OH)₂, Sorbalit oder andere inerte Stoffe eingesetzt werden. In der nachgeschalteten Reinigungsstufe fallen insbesondere gebrauchter Aktivkoks und gebrauchte Aktivkohle an, die mit toxischen Stoffen und Schwermetallen beladen sind und als kritischer Sonderabfall eingestuft werden. Ihre Deponierung ist schwierig, teuer und daher sehr unwirtschaftlich. Die Entsorgung von Aktivkoks und Aktivkohle erfolgt zur Zeit thermisch durch Verbrennung in einem Reaktor, zum Beispiel einem Drehrohrofen. Diese Entsorgung ist aufgrund der hohen Temperatur, die aufgebracht werden muß, unwirtschaftlich.

In Pyrolyseanlagen fällt Schwelkoks als Reststoff an. Der Kohlenstoffanteil beträgt bis zu 30 Gew.-%. Schwelkoks wird zur Zeit deponiert. Aus einem Pyrolyseofen wird Pyrolysegas mit einer Temperatur von 350 _{°} C bis 700 _{°} C abgeführt. Das Pyrolysegas wird durch Abscheidung vom groben Pyrolysestaub befreit. Der Pyrolysestaub weist einen Kohlenstoffgehalt von bis zu 35 Gew.-% auf. Das Pyrolysegas wird nach der Abscheidung einer Verwertung oder einer Nachverbrennung zugeführt. Bei der Nachverbrennung wird ein Abgas mit einer Temperatur von bis zu 1200 _{°} C erzeugt. Dieses Abgas wird in den Pyrolyseofen zur indirekten Beheizung des Pyrolyseofens zurückgeführt. Das Abgas ist jedoch mit Schadstoffen, wie S0₂, NO_{X}, HCI u. a. verunreinigt, die korrodierend wirken.

Der im Pyrolysegas enthaltene Pyrolysestaub wird auf eine Temperatur aufgewärmt, bei der seine Schmelzung einsetzt. Der teilweise geschmolzene Pyrolysestaub bewirkt Anbackungen im Pyrolyseofen, wenn das Pyrolysegas zurückgeführt wird. Pyrolysestaub umfaßt im Sinne der Erfindung auch Pyrolyseruß.

Aufgabe der vorliegenden Erfindung ist es, ein wirtschaftliches und umweltschonendes Verfahren zum Entsorgen von Asbest und/oder asbesthaltigem Material bereitzustellen, wobei bei niedrigen Temperaturen umweltverträgliche Stoffe mit reduziertem Volumen erhalten werden, die weiterverarbeitet oder kostengünstig deponiert werden können. Weitere Aufgabe der vorliegenden Erfindung ist es, ein wirtschaftliches und umweltschonendes Verfahren zum Entsorgen von Reststoffen aus Abfallverbrennungsanlagen sowie Aktivkoks und/oder Aktivkohle bereitzustellen, wobei bei niedrigen Temperaturen umweltverträgliche Stoffen bei reduziertem Volumen erhalten werden, die weiterverarbeitet oder kostengünstig deponiert werden können. Weitere Aufgabe der vorliegenden Erfindung ist es, ein wirtschaftliches und umweltfreundliches Verfahren zum Entsorgen von Schwelkoks und/oder Pyrolysestaub bereitzustellen, wobei ein hoher Umsatz beim Schmelzen erfolgt.

Die der vorliegenden Erfindung zugrundeliegende Aufgabe wird durch ein Verfahren zum Entsorgen von Asbest und/oder asbesthaltigem Material gelöst, bei dem
a) das Material auf eine Korngröße < 50 mm zerkleinert wird,
b) dem zerkleinerten Material Additive und feste Brennstoffe mit einer Korngröße < 50 mm zugesetzt werden und das vereinigte Material gemischt wird,
c) das Gemisch in den Ringschacht der Primärkammer eines Ofens eingeleitet wird,
d) in der Primärkammer eine Temperatur von 1250 _{°} C bis 1600 _{°} C eingestellt wird,
e) das ablaufende geschmolzene Material und die Rauchgase die Primärkammer durch den zentralen Auslauf verlassen, das geschmolzene Material durch die Sekundärkammer geleitet, granuliert und von einem Entschlacker ausgetragen wird.

Durch die Zugabe der erfindungsgemäßen Additive werden Gemische zubereitet, die einen sehr viel niedrigeren Schmelzpunkt aufweisen als Asbest und/oder asbesthaltiges Material. Asbest und/oder asbesthaltiges Material wird unter den erfindungsgemäßen Bedingungen in die umweltfreundlichen Modifikationen Olivin und Enstatit überführt. Weitere Vorteile des erfindungsgemäßen Verfahrens sind, daß bei diesen Temperaturen brennbare Bestandteile und toxische Verbindungen, wie halogenierte Dibenzodioxine und Dibenzofurane, zersetzt werden. Mineralische Bestandteile und Schwermetalle werden in eine dichte laugungsresistente Schlacke überführt. Es wird ein umweltfreundliches Produkt mit reduziertem Volumen erhalten, das im Straßenbau oder in der Bauindustrie und in der Feuerfestprodukt-Industrie verwendet werden kann. Asbest und/oder asbesthaltiges Material muß nicht mehr kostenintensiv entsorgt werden. Der besondere Vorteil der vorliegenden Erfindung ist, daß Asbest und/oder asbesthaltiges Material mit Additiven und Brennstoffen, die auch Reststoffe sein können, eingeschmolzen und als Schmelzprodukt weiterverarbeitet oder entsorgt werden.

Die der vorliegenden Erfindung zugrundeliegende Aufgabe wird weiter durch ein Verfahren zum Entsorgen von Asbest und/oder asbesthaltigem Material gelöst, bei dem
a) das Material auf eine Korngröße < 50 mm zerkleinert wird,
b) dem zerkleinerten Material Additive zugesetzt werden und das vereinigte Material gemischt wird,
c) das Gemisch in den Ringschacht der Primärkammer eines Oberflächenschmelzofens eingeleitet wird und ein oder mehrere Brennstoffe, wie feste Brennstoffe mit einer Korngröße < 1 mm, pastöse, flüssige oder gasförmige Brennstoffe, über den Brenner in den Oberflächenschmelzofen eingeleitet werden,
d) in der Primärkammer eine Temperatur von 1250 _{°} C bis 1600 _{°} C eingestellt wird,
e) das ablaufende geschmolzene Material und die Rauchgase die Primärkammer durch den zentralen Auslauf verlassen, das geschmolzene Material durch die Sekundärkammer geleitet, granuliert und von einem Entschlacker ausgetragen wird.

Diese erfindungsgemäße Variante hat den Vorteil, daß der Einsatz von Primärenergie, wie Heizöl und Erdgas, minimiert wird und die zu entsorgenden Abfall-Brennstoffe bei hohen Temperaturen sehr gut zersetzt werden.

Die der vorliegenden Erfindung zugrundeliegende Aufgabe wird weiter durch ein Verfahren zum Entsorgen von Asbest und/oder asbesthaltigem Material gelöst, bei dem
a) das Material auf eine Korngröße < 50 mm zerkleinert wird,
b) dem zerkleinerten Material Additive und ein Teil der Brennstoffe als feste Brennstoffe mit einer Korngröße < 50 mm zugesetzt werden und das vereinigte Material gemischt wird,
c) das Gemisch in den Ringschacht der Primärkammer eines Oberflächenschmelzofens eingeleitet wird und ein Teil der Brennstoffe als feste Brennstoffe mit einer Korngröße < 1 mm, pastöse, flüssige oder gasförmige Brennstoffe über den Brenner in den Oberflächenschmelzofen eingeleitet werden,
d) in der Primärkammer eine Temperatur von 1250 _{°} C bis 1600 _{°} C eingestellt wird,
e) das ablaufende geschmolzene Material und die Rauchgase die Primärkammer durch den zentralen Auslauf verlassen, das geschmolzene Material durch die Sekundärkammer geleitet, granuliert und von einem Entschlacker ausgetragen wird.

Diese erfindungsgemäße Variante hat den Vorteil, daß der Einsatz von Primärenergie, wie Heizöl und Erdgas, minimiert wird und die zu entsorgenden Abfall-Brennstoffe bei hohen Temperaturen sehr gut zersetzt werden. Zusätzlich können feste Abfall-Brennstoffe mit einer Korngröße < 50 mm gemäß Verfahrensstufe (b) in den Oberflächenschmelzofen eingeführt werden.

Eine bevorzugte Ausgestaltung der Erfindung ist ein Verfahren, bei dem gemäß Verfahrensstufe (b) als Additive, ein oder mehrere der schmelzpunktherabsetzenden Stoffe, wie Filter- und Kesselasche aus Haus-und Sondermüllverbrennungsanlagen, Laugungs- und Jarosit-Rückstände, Schlämme aus Fällungs-, Lösungs-, Farbherstellungs- und Phosphatierverfahren, metallurgische Schlacken, Krätzen und Stäube, Metallsowie Galvanikschlämme und -stäube, Elektronikschrott sowie Gießereisand verwendet werden. Diese Stoffe weisen Bestandteile auf, die schmelzpunktherabsetzend wirken, wie Alkalimetall-, Erdalkalimetallverbindungen, Schwermetall-, Silizium-, Aluminium-, Eisenverbindungen und Phosphor-, Schwefel-, Chlorsowie Fluorverbindungen. Diese Additive bewirken eine besonders starke Herabsetzung des Schmelzpunktes.

Eine bevorzugte Ausgestaltung der Erfindung ist ein Verfahren, bei dem gemäß Verfahrensstufe (d) eine Temperatur von 1300 _{°} C bis 1500 °C eingestellt wird. In diesem Temperaturbereich werden die besten Ergebnisse für die Einschmelzung von Asbest und/oder asbesthaltigem Material erreicht. Diese Stoffe werden bei den bevorzugten Temperaturen besonders gut in die umweltschonenden Modifikationen Olivin und Enstatit überführt.

Eine bevorzugte Ausgestaltung der Erfindung ist ein Verfahren, bei dem in der Primärkammer eine Luftzahl von λ= 0.7 bis = = 1.3 eingestellt wird. In diesem Bereich für die Luftzahl werden die besten Ergebnisse für die Einschmelzung von Asbest und/oder asbesthaltigem Material erreicht.

Eine bevorzugte Ausgestaltung der Erfindung ist ein Verfahren, bei dem in der Primärkammer eine Luftzahl von λ≦1 1 eingestellt wird. Hierbei werden Schwermetalle stärker verflüchtigt. Die verflüchtigten Stoffe kondensieren und werden in Filtern als Filterstäube abgeschieden. Die Filterstäube können deponiert oder einer Weiterverwendung zugeführt werden.

Eine bevorzugte Ausgestaltung der Erfindung ist ein Verfahren, bei dem in der Primärkammer eine Luftzahl von λ≧ 1 eingestellt wird. Hierbei wird ein guter Ausbrand erreicht, insbesondere wenn heizwertreiche Abfallstoffe eingesetzt werden.

Eine bevorzugte Ausgestaltung der Erfindung ist ein Verfahren, bei dem mit Sauerstoff angereicherte Luft in den Oberflächenschmelzofen eingeleitet wird. Durch die Verwendung von mit Sauerstoff angereicherten Luft wird vorteilhaft die Abgasmenge sowie die NOₓ₋Konzentration im Abgas reduziert.

Die der vorliegenden Erfindung zugrundeliegende Aufgabe wird weiter durch eine Vorrichtung zum Entsorgen von Asbest und/oder asbesthaltigem Material gelöst, bei dem der Oberflächenschmelzofen so ausgestaltet ist, daß der rotierende Außenmantel und der feststehende Innenmantel gegenüber dem feststehenden Ofendeckel mit Labyrinthdichtungen, die mit einem Inertgas beaufschlagt sind, oder mit federbelasteten Schleifringdichtungen an den Dichtungsstellen abgedichtet sind. Mit diesen erfindungsgemäßen Dichtungen wird verhindert, daß asbesthaltige Stäube aus dem Oberflächenschmelzofen ausgetragen werden. Bei den herkömmlich verwendeten Wasserdichtungen werden asbesthaltige Stäube mit dem recyclierten Wasser der Wasserdichtungen aus dem Oberflächenschmelzofen ausgetragen.

Die der vorliegenden Erfindung zugrundeliegende Aufgabe wird durch ein Verfahren zum Entsorgen von Reststoffen aus Abfallverbrennungsanlagen sowie Aktivkoks und/oder Aktivkohle gelöst, bei dem
a) Reststoff aus Abfallverbrennungsanlagen sowie Aktivkoks und/oder Aktivkohle in die Primärkammer des Oberflächenschmelzofens eingebracht werden,
b) in der Primärkammer eine Temperatur von 1250 _{°} C bis 1500 _{°} C eingestellt wird,
c) das ablaufende geschmolzene Material mit Rauchgasen die Primärkammer verläßt, das geschmolzene Material durch die Sekundärkammer geleitet und als Schlacke ausgetragen wird.

Vorteile des erfindungsgemäßen Verfahrens sind, daß bei diesen Temperaturen brennbare Bestandteile und toxische Verbindungen, wie halogenierte Dibenzodioxine und Dibenzofurane zersetzt werden. Mineralische Bestandteile und Schwermetalle werden in eine dichte laugungsresistente Schlacke überführt. Es wird ein umweltfreundliches Produkt mit reduziertem Volumen erhalten, das im Straßenbau, in der Bauindustrie und in der Feuerfestprodukt-Industrie verwendet werden kann.

Erfindungsgemäß werden zum Einschmelzen heizwertreiche Brennstoffe, wie Öle, Gase, kohlenstoffhaltige, feste Brennstoffe, z. B. Kohle, Klärschlamm, Koks oder Aktivkohle sowie heizwertreiche Abfallstoffe, wie geschredderte, feste Abfälle, Holzabfälle, Altöle, flüssige und pastöse Sonderabfälle eingesetzt.

Eine bevorzugte Ausgestaltung der Erfindung ist, daß gemäß Verfahrensstufe (b) eine Temperatur von 1300 _{°} C bis 1400 _{°} C eingestellt wird. In diesem Temperaturbereich werden die besten Ergebnisse für die Einschmelzung von Reststoffen aus Abfallverbrennungsanlagen erreicht.

Eine bevorzugte Ausgestaltung der Erfindung ist, daß Aktivkoks und/oder Aktivkohle unbehandelt dem Reststoff zugemischt werden und das Gemisch in die Primärkammer eingebracht wird. Das hat den Vorteil, daß ein guter Ausbrand erreicht wird.

Eine bevorzugte Ausgestaltung der Erfindung ist, daß Aktivkoks und/oder Aktivkohle direkt in die Primärkammer eingebracht werden. Das hat den Vorteil, daß ein guter Ausbrand erreicht wird und ein niedriger Kohlenstoffgehalt in der Schlacke erhalten wird. Noch vorteilhafter ist es wenn der kohlenstoffhaltige Reststoff gemahlen wird und mit einem Staubbrenner im Oberflächenschmelzofen verbrannt wird.

Eine bevorzugte Ausgestaltung der Erfindung ist, daß Aktivkoks und/oder Aktivkohle auf eine Korngröße < 1 mm zerkleinert und direkt über den Brenner in die Primärkammer eingeblasen wird. Bei dieser Korngröße wird ein besonders guter Ausbrand erreicht.

Eine bevorzugte Ausgestaltung der Erfindung ist, daß Aktivkoks und/oder Aktivkohle mit flüssigen und/oder pastösen Brennstoffen gemischt, das Gemisch dem Reststoff zugemischt und mit dem Reststoff in die Primärkammer eingebracht wird oder das Gemisch direkt in die Primärkammer eingebracht wird. Damit werden besonders gute Ergebnisse bei der Einschmelzung erreicht.

Eine bevorzugte Ausgestaltung der Erfindung ist, daß Aktivkoks und/oder Aktivkohle mit Zusatzstoffen dem Reststoff zugemischt werden und das Gemisch mit dem Reststoff in die Primärkammer eingebracht wird oder das Gemisch direkt in die Primärkammer eingebracht wird und bei dem als Zusatzstoffe ein oder mehrere der schmelzpunktherabsetzenden Stoffe, wie Filter- und Kesselasche aus Haus- und Sondermüllverbrennungsanlagen, Laugungs - und Jarosit-Rückstände, Schlämme aus Fällungs-, Lösungs-, Farbherstellungs- und Phosphatierverfahren, metallurgische Schlacken, Krätzen und Stäube, Metall- sowie Galvanikschlämme und -stäube, Elektronikschrott sowie Gießereisand verwendet werden. Diese Additive bewirken eine besonders starke Herabsetzung des Schmelzpunktes.

Eine bevorzugte Ausgestaltung der Erfindung ist, daß dem Gemisch getrockneter Klärschlamm zugemischt wird. Durch diese erfindungsgemäße Variante ist die Entsorgung von Klärschlamm möglich. Es hat sich überraschenderweise gezeigt, daß durch die Zugabe von Klärschlamm sehr gute Ergebnisse bei der Einschmelzung von Reststoffen aus Abfallverbrennungsanlagen erreicht werden.

Eine bevorzugte Ausgestaltung der Erfindung ist, daß Aktivkoks und/oder Aktivkohle mit Rostasche gemischt werden und das Gemisch mit dem Reststoff in die Primärkammer eingebracht wird oder das Gemisch direkt in die Primärkammer eingebracht wird. Durch diese erfindungsgemäße Variante ist die Entsorgung von Rostasche möglich. Es hat sich überraschenderweise gezeigt, daß ein Gemisch aus Aktivkoks und/oder Aktivkohle mit Rostasche energiesparend und sehr wirkungsvoll eingeschmolzen werden kann.

Eine bevorzugte Ausgestaltung der Erfindung ist, daß Rostasche in einem Magnetabscheider von eisenhaltigen Stoffen abgetrennt wird, die von eisenhaltigen Stoffen abgetrennte Rostasche gesiebt wird, bei dem eine Grobfraktion mit einer Korngröße > 50 mm abgetrennt wird und eine Feinfraktion mit einer Korngröße < 50 mm in die Primärkammer eingebracht wird. Dadurch werden sehr gute Ergebnisse bei der Einschmelzung von Rostasche erreicht. Eine bevorzugte Ausgestaltung der Erfindung ist, daß die Feinfraktion mit einer Korngröße < 50 mm gesiebt wird und eine Fraktion der Rostasche mit einer Korngröße von 2 mm bis 50 mm abgetrennt wird und eine Fraktion der Rostasche mit einer Korngröße < 2 mm in die Primärkammer eingebracht wird. Damit werden die besten Ergebnisse bei der Einschmelzung von Rostasche erreicht. Die Einschmelzung kann energiesparend durchgeführt werden.

Eine bevorzugte Ausgestaltung der Erfindung ist, daß in der Primärkammer eine Luftzahl von = = 0.7 bis = = 1.3 eingestellt wird. In diesem Bereich für die Luftzahl werden die besten Ergebnisse für die Einschmelzung von Reststoffen aus Abfallverbrennungsanlagen sowie Aktivkoks und/oder Aktivkohle erreicht.

Eine bevorzugte Ausgestaltung der Erfindung ist, daß in der Primärkammer eine Luftzahl von X 1 1 eingestellt wird. Unter diesen erfindungsgemäßen Bedingungen werden Schwermetalle stärker verflüchtigt.

Eine bevorzugte Ausgestaltung der Erfindung ist, daß in der Primärkammer eine Luftzahl von X 1 eingestellt wird. Unter diesen erfindungsgemäßen Bedingungen wird ein guter Ausbrand erreicht, insbesondere wenn heizwertreiche Abfallstoffe eingesetzt werden.

Eine bevorzugte Ausgestaltung der Erfindung ist, daß mit Sauerstoff angereicherte Luft in den Oberflächenschmelzofen eingeleitet wird. Durch die Verwendung von mit Sauerstoff angereicherter Luft wird vorteilhaft der Brennstoffbedarf und die Abgasmenge sowie die NOₓ₋Konzentration im Abgas reduziert.

Erfindungsgemäß ist eine Vorrichtung zum Entsorgen von Reststoffen aus Abfallverbrennungsanlagen vorgesehen, bei der in der Ofendecke der Primärkammer des Oberflächenschmelzofens ein oder mehrere Brenner angeordnet sind und an einer oder mehreren Stellen der Ofendecke Sekundärluft in die Primärkammer eingeleitet wird sowie an einer oder mehreren Stellen der Ofendecke Tertiärluft in die Primärkammer eingeleitet wird. Durch diese erfindungsgemäße Maßnahme wird die NOₓ₋Konzentration im Abgas wesentlich verringert.

Eine bevorzugte Ausgestaltung der Erfindung ist eine Vorrichtung, bei der als Primär- und Sekundärluft mit Sauerstoff angereicherte Luft in die Primärkammer eingeleitet wird. Dadurch werden bei der Verringerung der NOₓ₋Konzentration die besten Ergebnisse erreicht.

Erfindungsgemäß ist die Verwendung eines Oberflächenschmelzofens zum Entsorgen von Reststoffen aus Abfallverbrennungsanlagen vorgesehen.

Die Aufgabe der vorliegenden Erfindung wird durch ein Verfahren zum Entsorgen von Schwelkoks und/oder Pyrolysestaub gelöst, bei dem
a) pyrolysiertes Material von eisenhaltigen Stoffen befreit wird,
b) das von eisenhaltigen Stoffen befreite Material in eine Grobfraktion mit einer Korngröße von > 50 mm und eine Feinfraktion mit einer Korngröße < 50 mm getrennt wird,
c) die Feinfraktion in die Primärkammer des Oberflächenschmelzofens eingeleitet wird,
d) Pyrolysegas in die Primärkammer des Oberflächenschmelzofens eingeleitet wird,
e) das ablaufende, geschmolzene Material mit Rauchgas die Primärkammer verläßt, das geschmolzene Material durch die Sekundärkammer geleitet und als Schlacke ausgetragen wird.

Das pyrolysierte Material kann gemäß Verfahrensstufe (a) über einen Magnetabscheider geführt werden. Die Abtrennung von eisenhaltigem Material ist erfindungsgemäß vorgesehen, weil vorhandenes Eisen den Schmelzpunkt des Materials heraufsetzt. Die Grobfraktion gemäß Verfahrensstufe (b) besteht oft zum überwiegenden Teil aus inertem Material, wie Steine, Ziegelsteine und Keramikbestandteile.

In einem solchen Fall ist erfindungsgemäß vorgesehen, die Grobfraktion einer direkten Verwertung zuzuführen. Wenn der Anteil des inerten Materials < 50 Gew.-% beträgt ist erfindungsgemäß vorgesehen, die Grobfraktion zu zerkleinern und einzuschmelzen. Das Pyrolysegas gemäß Verfahrensstufe (d) wird zur Befeuerung des Oberflächenschmelzofens entweder nach der Kühlung und Staubabscheidung oder direkt zum Brenner des Oberflächenschmelzofens geführt und verbrannt.

Das erfindungsgemäße Verfahren weist den Vorteil auf, daß Schwelkoks und Pyrolysestaub wirtschaftlich und umweltschonend entsorgt werden. Das Verfahren ist insbesondere deshalb besonders wirtschaftlich, weil gleichzeitig das Pyrolysegas im Verfahren verwendet wird. Mineralische Bestandteile und Schwermetalle werden in eine dichte, laugungsresistente Schlacke überführt. Es wird ein umweltfreundliches Produkt mit reduziertem Volumen erhalten, das im Straßenbau, in der Bauindustrie und in der Feuerfestprodukt-Industrie verwendet werden kann. Da das erfindungsgemäße Verfahren ein Oberflächenschmelzverfahren ist, werden vorteilhafterweise nur wenige Schwermetalle und nur geringe Mengen Alkalimetalle verflüchtigt. Das Abgas enthält kein geschmolzenes Material. Es setzen sich daher in den nachgeschalteten Anlagenteilen keine Anbackungen an, die schwer entfernbar sind.

Eine bevorzugte Ausgestaltung der Erfindung ist, daß das Abgas aus der Sekundärkammer in einen Pyrolyseofen und in einen Rekuperator geleitet wird. Das erfindungsgemäße Verfahren bietet den großen Vorteil, daß die Pyrolyseanlage bei Verwendung von geschreddertem heizwertreichen Material entlastet wird, wodurch die Kapazität der Entsorgung vergrößert wird.

Eine bevorzugte Ausgestaltung der Erfindung ist, daß 20 Vol.-% bis 50 Vol.-% des Abgases aus der Sekundärkammer in den Pyrolyseofen und 40 Vol.-% bis 80 Vol.-% des Abgases in den Rekuperator geleitet werden. Der Pyrolyseofen kann somit vorteilhafterweise mit heißem Abgas aus dem Oberflächenschmelzofen geheizt werden. Durch diese Maßnahme wird die Reinigung des Abgases und die Heizenergie für den Pyrolyseofen gespart. Die Energieeinsparung ist in diesen Bereichen des Abgases besonders hoch.

Eine bevorzugte Ausgestaltung der Erfindung ist, daß das Abgas aus der Sekundärkammer im Rekuperator auf 300 _{°} C bis 500 _{°} C abgekühlt wird, 30 Vol.-% bis 80 Vol.-% der aufgewärmten Luft aus dem Rekuperator in die Primärkammer des Oberflächenschmelzofens eingeleitet werden und die restliche Luft in eine Brennkammer eingeleitet wird, in der das restliche Pyrolysegas verbrannt wird. Durch die Verwendung der aufgewärmten Luft werden besonders gute Ergebnisse bei der Energieeinsparung erreicht.

Eine bevorzugte Ausgestaltung der Erfindung ist, daß das Abgas aus dem Rekuperator in einer Quenche auf 180 _{°} C bis 260 _{°} C abgekühlt und aus der Quenche in eine Rauchgasreinigung geleitet wird. Durch diese Maßnahme wird vorteilhafterweise die Energie des Abgases genutzt, das vor dem Eintritt in die Quenche eine Temperatur von 400 _{°} C bis 500 _{°} C aufweist.

Eine bevorzugte Ausgestaltung der Erfindung ist, daß in der Primärkammer des Oberflächenschmelzofens eine Temperatur von 1250 _{°}C bis 1500 _{°}C eingestellt wird. Bei diesen Temperaturen werden brennbare Bestandteile und toxische Verbindungen, wie halogenierte Dibenzodioxine und Dibenzofurane zersetzt. Es werden beste Ergebnisse bei der Einschmelzung von Schwelkoks und Pyrolysestaub erreicht.

Eine bevorzugte Ausgestaltung der Erfindung ist, daß gemäß Verfahrensstufe (d) ein oder mehrere Brennstoffe wie Heizöl, heizwertreiche Abfälle, wie Kunststoffe, Koks, Schlämme, pastöse, flüssige und gasförmige, brennbare Abfälle oder Suspensionen aus Pyrolyseöl und Pyrolysestaub eingesetzt werden. Mit diesen Brennstoffen werden besonders gute Ergebnisse bei der Einschmelzung erreicht.

Eine bevorzugte Ausgestaltung der Erfindung ist, daß die gemäß Verfahrensstufe (b) abgetrennte Grobfraktion auf eine Korngröße < 50 mm zerkleinert und mit der Feinfraktion vereinigt wird. Die Grobfraktion kann erfindungsgemäß in einem Brecher nachzerkleinert und mit der Feinfraktion in den Oberflächenschmelzofen gegeben werden. Das hat den Vorteil, daß Grobfraktionen, die einen hohen Anteil an Schwelkoks aufweisen, erfindungsgemäß eingeschmolzen werden. Bei der Korngröße von < 50 mm werden sehr gute Ergebnisse bei der Einschmelzung erreicht.

Eine bevorzugte Ausgestaltung der Erfindung ist, daß mit Sauerstoff angereicherte Luft in den Oberflächenschmelzofen eingeleitet wird. Durch die Verwendung von mit Sauerstoff angereicherter Luft wird vorteilhaft der Brennstoffbedarf und die Abgasmenge sowie die NOₓ₋Konzentration im Abgas reduziert.

Eine bevorzugte Ausgestaltung der Erfindung ist, daß in der Primärkammer eine Luftzahl von = = 0.7 bis = = 1.3 eingestellt wird. In diesem Bereich für die Luftzahl werden die besten Ergebnisse für die Einschmelzung von Schwelkoks und/oder Pyrolysestaub erreicht.

Eine bevorzugte Ausgestaltung der Erfindung ist, daß in der Primärkammer eine Luftzahl von X 1 1 eingestellt wird. Unter diesen erfindungsgemäßen Bedingungen werden vorteilhaft Schwermetalle stärker verflüchtigt.

Eine bevorzugte Ausgestaltung der Erfindung ist, daß in der Primärkammer eine Luftzahl von λ≧ 1 eingestellt wird. Unter diesen erfindungsgemäßen Bedingungen wird vorteilhaft ein guter Ausbrand erreicht, insbesondere wenn heizwertreiche Abfallstoffe eingesetzt werden.

Erfindungsgemäß ist eine Vorrichtung zum Entsorgen von Schwelkoks und/oder Pyrolysestaub vorgesehen, bei der in der Ofendecke der Primärkammer des Oberflächenschmelzofens ein oder mehrere Brenner angeordnet sind und an einer oder mehreren Stellen der Ofendecke Sekundärluft in die Primärkammer eingeleitet wird sowie an einer oder mehreren Stellen der Ofendecke Tertiärluft in die Primärkammer eingeleitet wird. Durch diese erfindungsgemäße Maßnahme wird die NOₓ₋Konzentration im Abgas wesentlich verringert.

Eine bevorzugte Ausgestaltung der Erfindung ist eine Vorrichtung, bei der als Primär- und Sekundärluft mit Sauerstoff angereicherte Luft in die Primärkammer eingeleitet wird. Dadurch werden bei der Verringerung der NOₓ₋Konzentration die besten Ergebnisse erreicht.

Erfindungsgemäß ist die Verwendung des Oberflächenschmelzofens zum Entsorgen von Schwelkoks und/oder Pyrolysestaub vorgesehen.

Die Erfindung wird im folgenden anhand einer Zeichnung und eines Beispiels näher erläutert.

### Zeichnung

Die Zeichnung besteht aus den Fig. 1 bis Fig. 3
Fig. 1 zeigt einen Oberflächeneinschmelzofen (1), einen sogenannten KSMF- Schmelzofen,
Fig. 2 zeigt die Anordnung von drei Brennern und Einleitungsöffnungen für Sekundär- und Tertiärluft in der Ofendecke der Primärkammer des Oberflächenschmelzofens,
Fig. 3 zeigt ein Fließschema des erfindungsgemäßen Schmelzverfahrens.

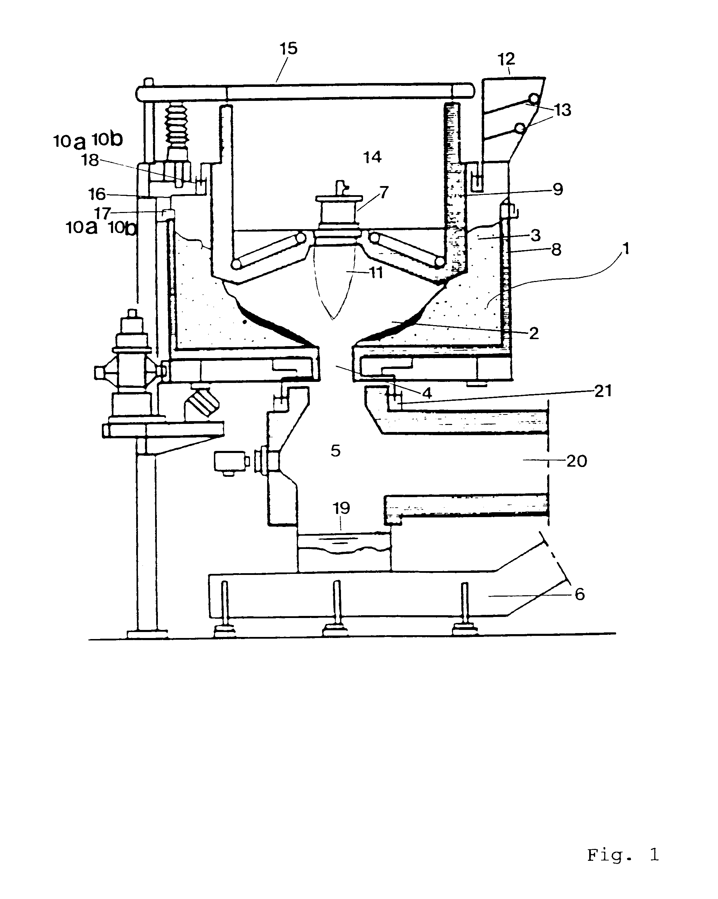

In Fig. 1 ist ein Oberflächeneinschmelzofen (1), ein sogenannter KSMF- Schmelzofen, dargestellt. Die Abkürzung KSMF steht für KUBOTA-Surface-Melting-Furnace. Der KSMF-Schmelzofen (1) und seine Handhabung sind u. a. in dem Prospekt "KUBOTA Melting Furnace for Sewage Sludge" der KUBOTA Corporation, Osaka, Japan beschrieben. Der Einschmelzofen (1), auch als Ofen (1) bezeichnet, besteht aus einem zylindrischen Außenmantel (8) in den ein zylindrischer Innenmantel (9) konzentrisch eingehängt ist. Der Außenmantel (8) dreht sich mit 0.5 bis 5 U/h. Zwischen dem Außenmantel (8) und dem Innenmantel (9) wird der Ringschacht (3) und die Primärkammer (2) gebildet. Der Innenmantel (9) läßt sich heben und senken, wodurch die Größe der Primärkammer (2) und des Ringschachts (3) an die benötigte Kapazität angepaßt wird. Im Innenraum (14) des Innenmantels (9) ist mindestens ein Brenner (7) angeordnet, dessen Flamme (11) in der Primärkammer (2) brennt. Der Innenraum (14) ist mit einem verfahrbaren Ofendeckel (15) verschlossen. Der Oberflächenschmelzofen (1) weist zum Einfüllen des Materials einen Trichter (12) auf, in dem zwei Doppelpendelklappen (13) angeordnet sind, wodurch der Oberflächenschmelzofen (1) gegen Eindringen von Falschluft abgesichert ist. Zwischen dem feststehenden Ofenabdeckung (16) und dem rotierenden Außenmantel (8) sowie dem feststehenden Innenmantel (9) sind gewöhnlich Wasserdichtungen (17, 18) angebracht. Am Oberflächenschmelzofen (1) befindet sich eine weitere Wasserdichtung (21). Die Wasserdichtungen (17, 18, 21) bieten einen absolut gasdichten Abschluß und gewährleisten einen schnellen Druckausgleich bei auftretenden Druckerhöhungen. Erfindungsgemäß sind beim Einschmelzen von Asbast und/oder asbesthaltigem Material anstatt der Wasserdichtungen (17, 18) Labyrinthdichtungen (10a) oder Schleifringdichtungen (10b) vorgesehen, die den Austrag von asbesthaltigen Stäuben aus dem Oberflächenschmelzofen zuverlässig verhindern. Im Boden der Primärkammer (2) ist zentrisch ein Auslauf (4), auch als Schlackenabzug bezeichnet, angebracht. Der Auslauf (4) bildet die Verbindung zwischen der Primärkammer (2) und der Sekundärkammer (5). Der Auslauf für die Schmelze aus der Sekundärkammer (5) befindet sich in einem Wasserbad (19). Durch das Wasserbad (19) wird ein gasdichter Abschluß erreicht. Das Wasserbad (19) steht in Verbindung mit dem Naßentschlacker (6). Die Rauchgase werden aus der Sekundärkammer (5) über den Ausgang (20) abgezogen und in an sich bekannter Weise gereinigt und abgeführt.

Das Material wird über den Trichter (12) in den Ringschacht (3) eingefüllt und durch die Drehung des Außenmantels (8) gleichmäßig verteilt - Das im Ringschacht (3) befindliche Material böscht sich von der Unterkante des feststehenden Innenmantels (9) konusförmig nach innen zum zentralen Auslauf (4) der Primärkammer (2) ab. Der eigentliche Reaktionsraum für den Schmelzprozeß wird so geschaffen. Die Flamme (11) des Brenners (7) bewirkt den Schmelzprozeß. An der Oberfläche des Materials entsteht eine 2 cm bis 5 cm dicke, schmelzflüssige Oberflächenschicht. Die ablaufende Schmelze verläßt zusammen mit den Rauchgasen die Primärkammer (2) durch den zentralen Auslauf (4). Die Schmelze fällt durch die Sekundärkammer (5) in das Wasserbad (19), wo sie granuliert. Der Naßentschlacker (6) fördert das Granulat mit einer Körngröße < 10 mm nach außen.

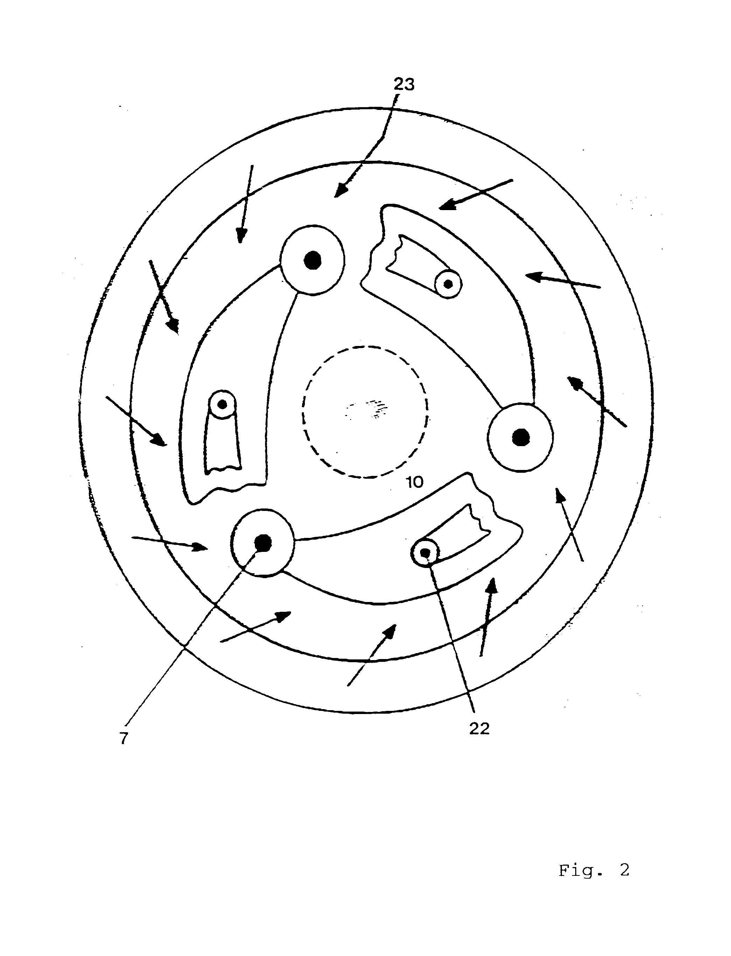

Fig. 2 zeigt die Anordnung von drei Brennern (7, 7', 7") und drei Einleitungsöffnungen (22, 22', 22") für Sekundärluft sowie gleichmäßig am äußeren Kreis verteilte mehrere Einleitungsöffnungen (23) für Tertiärluft in der Ofendecke (10) der Primärkammer (2) des Oberflächenschmelzofens (1). Die Flammen (11, 11', 11") der Brenner (7, 7', 7") brennen in der Primärkammer (2).

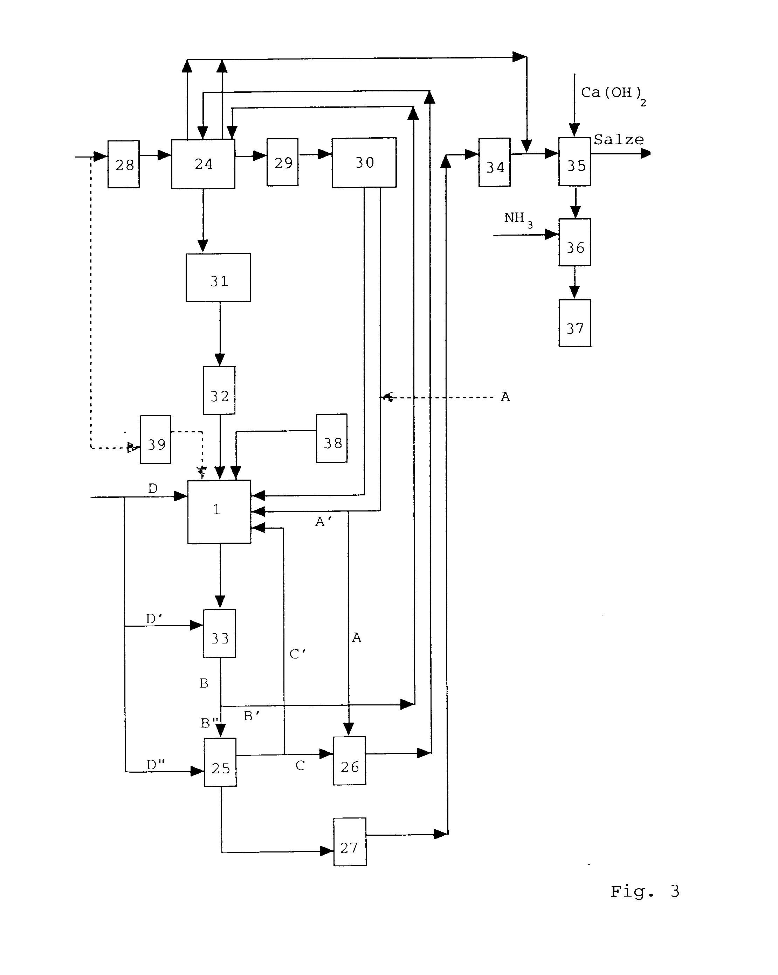

In Fig. 3 ist ein Fließschema des erfindungsgemäßen Verfahrens dargestellt. Aus einem Müllbunker (28) wird Material in einen Pyrolyseofen [Pyrolysetrommel] (24) gegeben. Das Pyrolysegas mit einer Temperatur von 400 _{°} C bis 700 _{°} C wird aus dem Pyrolyseofen (24) in eine Gaskühlung (29) geleitet. Das Pyrolysegas wird aus der Gaskühlung (29) in eine Staubabscheidung (30) geleitet und entstaubt. Der Staub wird aus der Staubabscheidung (30) über die Leitung (A) abgeführt. Die Leitung (A) wird in die Leitungen (A') und (A") gezweigt. Das Pyrolysegas wird über die Leitung (A') in den Oberflächenschmelzofen (1) und über die Leitung (A") in die Brennkammer (26) geleitet. Aus dem Pyrolyseofen (24) wird das pyrolysierte Material in den Magnetabscheider (31) geleitet. Im Magnetabscheider (31) erfolgt die Abtrennung von eisenhaltigem Material. Das eisenhaltige Material wird ausgetragen. Aus dem Magnetabscheider (31) wird das Material auf ein Sieb (32) gegeben. Das Material mit einer Korngröße < 50 mm wird in den KSFM-Ofen (1) gegeben. Das Material mit einer Korngröße > 50 mm wird in eine Brecher (38) zerkleinert und in den Oberflächenschmelzofen (1) gegeben. In den Oberflächenschmelzofen (1) kann das im Schredder (39) geschredderte heizwertreiche Material gegeben werden. Das Abgas aus dem Oberflächenschmelzofen (1) wird in eine Nachverbrennung (33) geleitet und über die Leitung (B) aus der Nachverbrennung (33) ausgetragen. Die Leitung (B) ist in die Leitungen (B') und (B") gezweigt. Das Abgas aus der Nachverbrennung (33) gelangt über die Leitung (B') mit einer Temperatur von 1000 _{°} C bis 1100 _{°} C in den Pyrolyseofen (24). Über die Leitung (B") gelangt das Abgas in den Rekuperator (25). 20 Vol.-% bis 50 Vol.-% des Abgases aus dem Oberflächenschmelzofen (1) werden in den Pyrolyseofen (24) und 40 Vol.-% bis 80 Vol.-% des Abgases werden in den Rekuperator (25) geleitet. Das Abgas wird im Rekuperator (25) auf 300 _{°} C bis 500 °C abgekühlt. 30 Vol.-% bis 80 Vol.-% der aufgewärmten Luft werden aus dem Rekuperator (25) über die Leitung (C') in den Oberflächenschmelzofens (1) eingeleitet. Die restliche Luft wird über die Leitung (C) in die Brennkammer (26) eingeleitet, in der das restliche Pyrolysegas verbrannt wird. Das Abgas aus der Brennkammer (26) wird mit einer Temperatur von etwa 1000 °C in den Pyrolyseofen (24) geleitet. Das Abgas aus dem Rekuperator (25) wird in eine Quenche (27) geleitet und auf 180 °C bis 260 °C abgekühlt und aus der Quenche (27) in eine Reststaubabscheidung (34) geleitet. Aus der Reststaubabscheidung (34) werden die Reststäube abgeführt. Das Abgas aus der Reststaubabscheidung (34) wird mit den Heizgasen aus dem Pyrolyseofen (24) vereint. Die Heizgase werden in den Pyrolyseofen (24) aus der Brennkammer (26) und über die Leitung (B') geleitet. Die vereinten Gase werden in die zweistufige Rauchgasreinigung (35) geleitet. In die zweistufige Rauchgasreinigung (35) wird Ca(OH)₂ eingeleitet, und aus der Rauchgasreinigung (35) werden Salze abgeführt. Danach wird das Gas in eine SCR (36) geleitet (SCR = Katalytische Stickoxid-Reduktionsanlage). In die SCR (36) wird NH₃ eingeleitet. Danach wird das Gas in einen Kamin (37) geleitet.

### Beispiele

### Beispiel 1

150 kg Spritzasbest mit einem Schmelzpunkt von 1550 _{°} C wurden auf eine Korngröße von < 50 mm in einer Hammermühle zerkleinert. 50 kg Filterstaub aus einer Hausmüllverbrennungsanlage sowie 50 kg getrockneter Klärschlamm (> 80 % Trockensubstanz) wurden dem zerkleinerten Spritzasbest zugemischt. Das Gemisch von 250 kg wurde kontinuierlich in die Primärkammer eines KSMF-Schmelzofens mit einem Innendurchmesser von 2 m eingebracht. In der Primärkammer wurde eine Temperatur von 1350 °C bei einer Luftzahl = = 1.05 eingestellt. In der Primärkammer wurde die erforderliche Schmelzenergie durch Verbrennen von 95 kg Heizöl erzeugt. In der Sekundärkammer wurde ein Sauerstoffgehalt von 3.5 Vol.-% eingestellt. Aus dem Naßentschlacker wurden 195 kg Schmelzgranulat mit einer Korngröße von 1 mm bis 5 mm ausgetragen. Das Schmelzprodukt hatte eine Dichte von 3 g/cm³ und lag zu 70 % als Olivin und Enstatit vor, Serpentin wurde nicht nachgewiesen. Das Abgas aus der Sekundärkammer hatte einen NOₓ-Gehalt von 150 mg/Nm³ und einen CO-Gehalt von 10 mg/Nm³.

### Beispiel 2

1143 kg/h Reststoff als Staub aus einer Hausmüllverbrennungsanlage, 429 kg/h Reststoff als Staub aus einer Industriemüllverbrennungsanlage und 200 kg/h auf eine Korngröße von < 50 mm zerkleinertes Altglas wurden gemischt und kontinuierlich in die Primärkammer eines KSMF-Schmelzofens mit einem Innendurchmesser von 2 m eingebracht. In der Primärkammer wurde eine Temperatur von 1350 °C bei einer Luftzahl λ = 1.01 eingestellt. Das Gemisch wies einen Schmelzpunkt von 1260 °C auf. Die Verbrennungsluft wurde auf 300 _{°} C vorgewärmt. In der Primärkammer wurde die erforderliche Schmelzenergie durch Verbrennen von 630 kg/h Aktivkoks und 60 kg/h ÖI bewirkt. Der Aktivkoks wurde in einer Schwingmühle auf eine Korngröße < 500 um, 80 % < 80 um zerkleinert. Der Aktivkoks und das ÖI wurden gemischt und über drei Brenner eingeleitet. In der Sekundärkammer wurde ein Sauerstoffgehalt von 6.5 Vol.-% eingestellt. Die Temperatur des Abgases aus der Primärkammer sinkt in der Sekundärkammer nach einer Verweilzeit von 2 Sekunden auf 1020 °C. Aus dem Naßentschlacker wurden 1385 kg/h Schmelzgranulat mit einer Korngröße von 1 mm bis 5 mm ausgetragen. Das Schmelzprodukt hatte eine Dichte von 3 g/Nm^{3.} Am Ausgang der Sekundärkammer wurden 11000 Nm³/h Abgas gemessen. Das Abgas aus der Sekundärkammer hatte einen NOₓ₋Gehalt von 180 mg/Nm³ und einen CO-Gehalt von 15 mg/Nm³.

### Beispiel 3

200 kg Schwelkoks aus einer Pyrolyseanlage wurden über einen Magnetabscheider geführt. Dabei wurden 10 kg eisenhaltigen Materials abgetrennt. Das restliche Material wurde auf ein Sieb mit einer Maschengröße vom < 50 mm gegeben. Dabei wurden 3 kg einer Grobfraktion mit einer Korngröße von 50 mm abgetrennt. 187 kg einer Feinfraktion mit einer Korngröße < 50 mm wurden in einen KSMF-Schmelzofen gegeben. In der Primärkammer wurde eine Temperatur von 1350 °C bei einer Luftzahl von λ = 1.05 eingestellt. Zur Erreichung der Temperatur wurden 45 kg Heizöl verbrannt. Die Verbrennungsluft wurde auf eine Temperatur von 400 °C aufgewärmt. Aus dem Naßentschlacker wurden 135 kg Schmelzgranulat mit einer Korngröße von 1 mm bis 5 mm ausgetragen. In der Sekundärkammer wurde ein Sauerstoffgehalt von 3,5 Vol.-% eingestellt. Das Abgas aus der Sekundärkammer hatte einen NOₓ₋Gehalt von 140 mg/Nm³ und einen CO-Gehalt von 15 mg/Nm³. Das Abgas aus der Sekundärkammer wies eine Temperatur von 1000 °C auf. 30 Vol.-% des Abgases aus der Sekundärkammer wurden zum Beheizen eines Pyrolyseofens verwendet. 70 Vol.-% des Abgases aus der Sekundärkammer wurden in einen Rekuperator eingeleitet, in dem die Verbrennungsluft für den KSMF-Schmelzofen auf 400 °C aufgewärmt wurde. 50 Vol.-% der auf 400 °C aufgewärmten Luft wurden in den KSMF-Schmelzofen eingeleitet. Die restlichen 50 Vol.-% wurden in eine Brennkammer aufgegeben, in der das Pyrolysegas nachverbrannt wurde. Die auf 450 °C abgekühlten Abgase aus dem Rekuperator wurden in eine Quenche eingeleitet. In der Quenche wurde durch Eindüsen von Wasser die Temperatur der Abgase auf 220 _{°} C abgesenkt. Die Abgase wurden einer bekannten Abgasreinigung zugeführt.

### Beispiel 4

Beispiel 4 wurde wie Beispiel 3 durchgeführt, bei dem die Verbrennungsluft mit Sauerstoff auf 30 Vol.- % 0₂ angereichert wurde. Die Menge des Heizöls wurde auf 25 kg reduziert. Die dabei produzierte Rauchgasmenge wurde um 30% gesenkt. Aus dem Naßentschlacker wurden 135 kg Schmelzgranulat mit einer Korngröße von 1 mm bis 5 mm ausgetragen.

### Beispiel 5

Beispiel 5 wurde wie Beispiel 3 durchgeführt, bei dem Pyrolysegas in den KSMF-Schmelzofen eingeleitet wurde. Die Menge des Heizöls wurde auf 10 kg reduziert. Aus dem Naßentschlacker wurden 135 kg Schmelzgranulat mit einer Korngröße von 1 mm bis 5 mm ausgetragen.

### Bezugszeichenliste

1 Oberflächenschmelzofen
2 Primärkammer
3 Ringschacht
4 Auslauf
5 Sekundärkammer
6 Naßentschlacker
7 Brenner
8 rotierender Außenmantel
9 feststehender Innenmantel
10 Ofendecke (10)
10a Labyrinthdichtungen
10b Schleifringdichtungen
11 Flamme
12 Trichter
13 Doppelpendelklappen
14 Innenraum
15 Ofendeckel
16 Ofenabdeckung
17 Wasserdichtungen
18 Wasserdichtungen
19 Wasserbad
20 Ausgang
21 Wasserdichtung
22 Einleitungsöffnungen
23 Einleitungsöffnungen
24 Pyrolyseofen
25 Rekuperator
26 Brennkammer
27 Quenche
28 Müllbunker
29 Gaskühlung
30 Staubabscheidung
31 Magnetabscheider
32 Sieb
33 Nachverbrennung
34 Reststaubabscheidung
35 Rauchgasreinigung
36 SCR
37 Kamin Leitung A, B, C, D

## Patentansprüche

1. Verfahren zum Entsorgen von Asbest und/oder asbesthaltigem Material, bei dem
a) das Material auf eine Korngröße < 50 mm zerkleinert wird,
b) dem zerkleinerten Material Additive und feste Brennstoffe mit einer Korngröße < 50 mm zugesetzt werden und das vereinigte Material gemischt wird,
c) das Gemisch in den Ringschacht (3) der Primärkammer (2) eines Oberflächenschmelzofens (1) eingeleitet wird,
d) in der Primärkammer (2) eine Temperatur von 1250 _{°} C bis 1600 _{°} C eingestellt wird,
e) das ablaufende geschmolzene Material und die Rauchgase die Primärkammer (2) durch den zentralen Auslauf (4) verlassen, das geschmolzene Material durch die Sekundärkammer (5) geleitet, granuliert und von einem Entschlacker (6) ausgetragen wird.

2. Verfahren zum Entsorgen von Asbest und/oder asbesthaltigem Material, bei dem
a) das Material auf eine Korngröße < 50 mm zerkleinert wird,
b) dem zerkleinerten Material Additive zugesetzt werden und das vereinigte Material gemischt wird,
c) das Gemisch in den Ringschacht (3) der Primärkammer (2) eines Oberflächenschmelzofens (1) eingeleitet wird und ein oder mehrere Brennstoffe, wie feste Brennstoffe mit einer Korngröße < 1 mm, pastöse, flüssige oder gasförmige Brennstoffe, über den Brenner (7) in den Oberflächenschmelzofen (1) eingeleitet werden,
d) in der Primärkammer (2) eine Temperatur von 1250 _{°} C bis 1600 _{°} C eingestellt wird,
e) das ablaufende geschmolzene Material und die Rauchgase die Primärkammer (2) durch den zentralen Auslauf (4) verlassen, das geschmolzene Material durch die Sekundärkammer (5) geleitet, granuliert und von einem Entschlacker (6) ausgetragen wird.

3. Verfahren zum Entsorgen von Asbest und/oder asbesthaltigem Material, bei dem
a) das Material auf eine Korngröße < 50 mm zerkleinert wird,
b) dem zerkleinerten Material Additive und ein Teil der Brennstoffe als feste Brennstoffe mit einer Korngröße < 50 mm zugesetzt werden und das vereinigte Material gemischt wird,
c) das Gemisch in den Ringschacht (3) der Primärkammer (2) eines Oberflächenschmelzofens (1) eingeleitet wird und ein Teil der Brennstoffe als feste Brennstoffe mit einer Korngröße < 1 mm, pastöse, flüssige oder gasförmige Brennstoffe über den Brenner (7) in den Oberflächenschmelzofen (1) eingeleitet werden,
d) in der Primärkammer (2) eine Temperatur von 1250 _{°} C bis 1600 _{°} C eingestellt wird,
e) das ablaufende geschmolzene Material und die Rauchgase die Primärkammer (2) durch den zentralen Auslauf (4) verlassen, das geschmolzene Material durch die Sekundärkammer (5) geleitet, granuliert und von einem Entschlacker (6) ausgetragen wird.

4. Verfahren nach den Ansprüchen 1 bis 3, bei dem gemäß Verfahrensstufe (b) als Additive, ein oder mehrere der schmelzpunktherabsetzenden Stoffe, wie Filter- und Kesselasche aus Haus- und Sondermüllverbrennungsanlagen, Laugungs- und Jarosit-Rückstände, Schlämme aus Fällungs-, Lösungs-, Farbherstellungs- und Phosphatierverfahren, metallurgische Schlacken, Krätzen und Stäube, Metallsowie Galvanikschlämme und -stäube, Elektronikschrott sowie Gießereisand verwendet werden.

5. Verfahren zum Entsorgen von Reststoffen aus Abfallverbrennungsanlagen sowie Aktivkoks und/oder Aktivkohle, bei dem
a) der Reststoff sowie Aktivkoks und/oder Aktivkohle in die Primärkammer (2) des Oberflächenschmelzofens (1) eingebracht werden,
b) in der Primärkammer (2) eine Temperatur von 1250 _{°} C bis 1500 _{°} C eingestellt wird,
c) das ablaufende geschmolzene Material mit Rauchgasen die Primärkammer (2) verläßt, das geschmolzene Material durch die Sekundärkammer (5) geleitet und als Schlacke ausgetragen wird.

6. Verfahren nach Anspruch 5, bei dem Aktivkoks und/oder Aktivkohle unbehandelt dem Reststoff zugemischt werden und das Gemisch in die Primärkammer (2) eingebracht wird.

7. Verfahren nach Anspruch 5, bei dem Aktivkoks und/oder Aktivkohle direkt in die Primärkammer (2) eingebracht werden.

8. Verfahren nach Anspruch 5, bei dem Aktivkoks und/oder Aktivkohle auf eine Korngröße < 1 mm zerkleinert und direkt über den Brenner (7) in die Primärkammer (2) eingeblasen wird.

9. Verfahren nach Anspruch 5, bei dem Aktivkoks und/oder Aktivkohle mit flüssigen und/oder pastösen Brennstoffen gemischt, das Gemisch dem Reststoff zugemischt und mit dem Reststoff in die Primärkammer (2) eingebracht wird oder das Gemisch direkt in die Primärkammer (2) eingebracht wird.

10. Verfahren nach Anspruch 5, bei dem Aktivkoks und/oder Aktivkohle mit Zusatzstoffen dem Reststoff zugemischt werden und das Gemisch mit dem Reststoff in die Primärkammer (2) eingebracht wird oder das Gemisch direkt in die Primärkammer (2) eingebracht wird und bei dem als Zusatzstoffe ein oder mehrere der schmelzpunktherabsetzenden Stoffe, wie Filter- und Kesselasche aus Haus- und Sondermüllverbrennungsanlagen, Laugungs- und Jarosit-Rückstände, Schlämme aus Fällungs-, Lösungs-, Farbherstellungs- und Phosphatierverfahren, metallurgische Schlacken, Krätzen und Stäube, Metallsowie Galvanikschlämme und -stäube, Elektronikschrott sowie Gießereisand verwendet werden.

11. Verfahren nach Anspruch 10, bei dem dem Gemisch getrockneter Klärschlamm zugemischt wird.

12. Verfahren nach Anspruch 5, bei dem Aktivkoks und/oder Aktivkohle mit Rostasche gemischt werden und das Gemisch mit dem Reststoff in die Primärkammer (2) eingebracht wird oder das Gemisch direkt in die Primärkammer (2) eingebracht wird.

13. Verfahren nach Anspruch 12, bei dem Rostasche in einem Magnetabscheider von eisenhaltigen Stoffen abgetrennt wird, die von eisenhaltigen Stoffen abgetrennte Rostasche gesiebt wird, bei dem eine Grobfraktion mit einer Korngröße > 50 mm abgetrennt wird und eine Feinfraktion mit einer Korngröße < 50 mm in die Primärkammer (2) eingebracht wird.

14. Verfahren nach den Ansprüchen 12 oder 13, bei dem die Feinfraktion mit einer Korngröße < 50 mm gesiebt wird und eine Fraktion mit einer Korngröße von 2 mm bis 50 mm abgetrennt wird und eine Fraktion mit einer Korngröße < 2 mm in die Primärkammer (2) eingebracht wird.

15. Verfahren zum Entsorgen von Schwelkoks und/oder Pyrolysestaub, bei dem
a) das Material von eisenhaltigen Stoffen befreit wird,
b) das von eisenhaltigen Stoffen befreite Material in eine Grobfraktion mit einer Korngröße von > 50 mm und eine Feinfraktion mit einer Korngröße < 50 mm getrennt wird,
c) die Feinfraktion in die Primärkammer (2) des Oberflächenschmelzofens (1) eingeleitet wird,
d) Pyrolysegas in die Primärkammer (2) des Oberflächenschmelzofens (1) eingeleitet wird,
e) das ablaufende, geschmolzene Material mit Rauchgas die Primärkammer (2) verläßt, das geschmolzene Material durch die Sekundärkammer (5) geleitet und als Schlacke ausgetragen wird.

16. Verfahen nach Anspruch 15, bei dem Abgas aus der Sekundärkammer (5) in einen Pyrolyseofen (24) und in einen Rekuperator (25) geleitet wird.

17. Verfahren nach Anspruch 16, bei dem 20 Vol.-% bis 50 Vol.-% des Abgases aus der Sekundärkammer (5) in den Pyrolyseofen (24) und 40 Vol.-% bis 80 Vol.-% des Abgases in den Rekuperator (25) geleitet werden.

18. Verfahren nach den Ansprüchen 15 bis 17, bei dem das Abgas aus der Sekundärkammer (5) im Rekuperator (25) auf 300 _{°} C bis 500 °C abgekühlt wird, 30 Vol.-% bis 80 Vol.-% der aufgewärmten Luft aus dem Rekuperator (25) in die Primärkammer (2) des Oberflächenschmelzofens (1) eingeleitet werden und die restliche Luft in eine Brennkammer (26) eingeleitet wird, in der das restliche Pyrolysegas verbrannt wird.

19. Verfahren nach den Ansprüchen 15 bis 18, bei dem das Abgas aus dem Rekuperator (25) in einer Quenche (27) auf 180 °C bis 260 °C abgekühlt und aus der Quenche (27) in eine Rauchgasreinigung geleitet wird.

20. Verfahren nach den Ansprüchen 15 bis 19, bei dem in der Primärkammer (2) des Oberflächenschmelzofens (1) eine Temperatur von 1250 _{°} C bis 1500 _{°} C eingestellt wird.

21. Verfahren nach den Ansprüchen 15 bis 20, bei dem gemäß Verfahrensstufe (d) ein oder mehrere Brennstoffe wie Heizöl, heizwertreiche Abfälle, wie Kunststoffe, Koks, Schlämme, pastöse, flüssige und gasförmige brennbare Abfälle oder Suspensionen aus Pyrolyseöl und Pyrolysestaub eingesetzt werden.

22. Verfahren nach den Ansprüchen 15 bis 21, bei dem die gemäß Verfahrensstufe (b) abgetrennte Grobfraktion auf eine Korngröße < 50 mm zerkleinert und mit der Feinfraktion vereinigt wird.

23. Verfahren nach den Ansprüchen 15 bis 22, bei dem mit Sauerstoff angereicherte Luft in den Oberflächenschmelzofen (1) eingeleitet wird.

24. Verfahren nach den Ansprüchen 1 bis 23, bei dem in der Primärkammer (2) eine Luftzahl von = = 0.7 bis = = 1.3 eingestellt wird.

25. Verfahren nach den Ansprüchen 1 bis 24, bei dem in der Primärkammer (2) eine Luftzahl von λ≦ 1 eingestellt wird.

26. Verfahren nach den Ansprüchen 1 bis 25, bei dem in der Primärkammer (2) eine Luftzahl von λ≧ 1 eingestellt wird.

27. Vorrichtung zum Entsorgen von Asbest und/oder asbesthaltigem Material, bei dem der Oberflächenschmelzofen (1) so ausgestaltet ist, daß der rotierende Außenmantel (8) und der feststehende Innenmantel (9) gegenüber dem feststehenden Ofenabdeckung (16) mit Labyrinthdichtungen (10a), die mit einem Inertgas beaufschlagt sind, oder mit federbelasteten Schleifringdichtungen (10b) abgedichtet sind.

28. Vorrichtung zum Entsorgen von Reststoffen aus Abfallverbrennungsanlagen und von Aktivkoks und/oder Aktivkohle sowie von Schwelkoks und/oder Pyrolysestaub, bei der in der Ofendecke (10) der Primärkammer (2) des Oberflächenschmelzofens (1) ein oder mehrere Brenner (7) angeordnet sind und an einer oder mehreren Stellen (22) der Ofendecke (10) Sekundärluft in die Primärkammer (2) eingeleitet wird sowie an einer oder mehreren Stellen (23) der Ofendecke (10) Tertiärluft in die Primärkammer (2) eingeleitet wird.

29. Verwendung eines Oberflächenschmelzofens (1) zum Entsorgen von Asbest und/oder asbesthaltigem Material und von Reststoffen aus Abfallverbrennungsanlagen.sowie von Schwelkoks und/oder Pyrolysestaub.
